# EUROPÄISCHE PATENTSCHRIFT

(11) **EP 1 522 480 B1**
(45) Veröffentlichungstag und Bekanntmachung des Hinweises auf die Patenterteilung: **08.12.2010**
(21) Anmeldenummer: 04024206.7
(22) Anmeldetag: 11.10.2004
(51) Int. Cl.: B60T 17/22

(54) **Bremssicherungssystem für ein spurgeführtes Fahrzeug und Verfahren zur Überwachung des aktuellen Bremsvermögens eines spurgeführten Fahrzeuges und zum Einleiten geeigneter Sicherheitsreaktionen**
Brake monitoring apparatus and method for railway vehicle
Procédé et dispositif de surveillance de frein pour un véhicule ferroviaire

(30) Priorität: 09.10.2003 DE 10347620
(43) Veröffentlichungstag der Anmeldung: 13.04.2005
(73) Patentinhaber: Bombardier Transportation GmbH, 10785 Berlin (DE)
(72) Erfinder: Krevet, Rasmus, 38114 Braunschweig (DE)
(74) Vertreter: Broydé, Marc

(56) Entgegenhaltungen:
- EP-A- 1 129 888
- WO-A-91/04178
- DE-A1- 3 311 041
- DE-A1- 3 827 363
- DE-A1- 19 510 755
- DE-A1- 19 703 838
- DE-A1- 19 848 994

## Beschreibung

Die Erfindung betrifft alle spurgeführten Verkehrsmittel. Diese werden im folgenden Eisenbahnen genannt. Eisenbahnfahrzeuge weisen Bremsen auf. Typische Ausführungen sind Luftdruckbremsen und elektromotorische Bremsen. Es treten leider noch Unfälle aufgrund von mangelhaftem Bremsvermögen auf. Die Bremsen werden zwar geprüft, allerdings wird nicht die tatsächliche Bremswirkung, das heisst die negative Beschleunigung, im folgenden als Verzögerung bezeichnet, geprüft. Vielmehr prüft man nur das Anliegen der Bremsklötze oder technische Parameter wie Luftdruck oder Eigenschaften der elektrischen Ausrüstung. Dennoch kann die Bremswirkung durch versteckte Mängel beeinträchtigt sein. Lediglich der Lokführer stellt subjektiv fest, ob die Bremswirkung bei einer Betriebsbremsung genügend ist. Dieses Verfahren ist aber sehr ungenau.

Aus der Schrift WO-01/92076 ist ein Verfahren zur Wirkungsüberwachung von Bremsanlagen von Schienenfahrzeugen bekannt, bei dem eine Bremsanforderung des Fahrers mit der sich einstellenden Fahrzeugereaktion verglichen wird und durch sequentielle Überprüfung mehrerer Ansprechkriterien gegebenenfalls auftretende Störungen erkannt und eine Not- bzw. Sicherheitsbremsung eingeleitet wird. Mehrere Verfabrensschritte sind notwendig, um zu einer brauchbaren Entscheidung zu gelangen. Erst einmal müssen in einem ersten Schritt die Ist- und Sollwerte der Fahrzeugverzögerung ermittelt und miteinander verglichen werden, bevor in einem zweiten Schritt die Ist- und Sollwerte der Bremskräfte ermittelt und miteinander verglichen werden.

Die Schrift DE 195 10 755 offenbart ein Bremssicherungssystem sowie ein Verfahren zur Überwachung des aktuellen Dremsvermögens für ein mit Bremsen ausgestattetes spurgeführtes Fahrzeug. Das Bremssicherungssystem weist ein Auswertemodul mit Kennliniendaten sowie Einlesebaugruppen auf, die einen Bremssollwert und die aktuelle Geschwindigkeit einlesen, wobei das Auswertemodul die während einer Bremsung erzielte Verzögerung mit einer erwarteten Bremsverzögerung vergleicht und bei Abweichungen eine Meldung ausgibt

Die Aufgabe der Erfindung ist es, mit einfachen Mitteln das aktuelle Bremsvermögen eines spurgeführten Fahrzeugs mit hoher Zuverlässigkeit zu bestimmen und die an das aktuelle Bremsvermögen angepassten Bremskurven an ein Zugsicherungssystem auszugeben.

Die Aufgabe wird durch ein Bremssicherungssystem gemäß den Ansprüchen 1 bis 4 und durch ein Verfahren zur Überwachung des aktuellen Bremsvermögen eines mit Bremsen ausgestatteten spurgeführten Fahrzeuges und zum Einleiten geeigneter Sicherheitsreaktionen gemäß den Ansprüchen 5 bis 8 gelöst. Das Prinzip besteht darin, statt Parameter oder Teilfunktionen der Bremse zu prüfen, die tatsächliche Bremsverzögerung während der Fahrt zu prüfen. Die während üblicher Bremsungen, also beispielsweise auch geringfügige Betriebsbremsungen, resultierende Verzögerung wird mit einem Sollwert verglichen. Vorher werden Kennliniendaten in das System eingegeben, die Bremssollwerten erwartete Verzögerungswerte zuordnen. Diese sind parametrierbar, beispielweise durch die Bremsart,-stellung und die an das Eisenbahnfahrzeug angehängte Zuglast. Die Parametrisierung erfolgt manuell oder automatisch. Während der Fahrt werden die Kennliniendaten durch das aktuell befahrene Steigungsprofil, auf dem sich der gesamte Zug befindet, parametrisiert. Ist die Bremswirkung zu gering, wird die Kennlinie geändert. Falls allen Sichezb.eitsanfoxderungen genügt wird, kann das System die Kennlinie auch in Richtung einer größeren Bremswirkung anpassen.

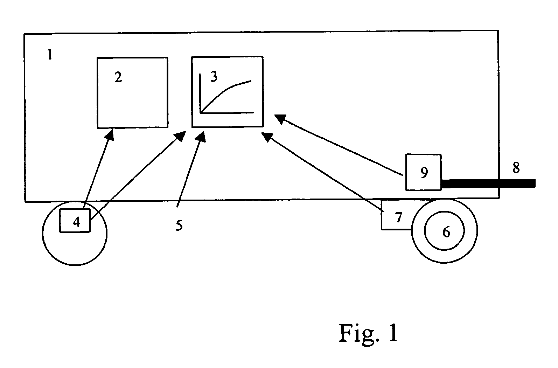

Ein Ausführungsbeispiel ist in der Figur 1 dargestellt.

Ein Eisenbahnfahrzeug 1 hat ein Zugsicherungssystem 2 an Bord. Beispiele hierfür sind das Punkt Zug Beeinflussungssystem, das Linien Zug Beeinflussungssystem oder das European Train Control System. Ein Auswertemodul 3 eines Bremssicherungssystems dient der Überwachung der Bremswirkung und der Initiierung von geeigneten Sicherheitsreaktionen. Mit einer Geschwindigkeitseinleseeinheit 4 wird die aktuelle Geschwindigkeit in das Zugsicherungssystem 2 und Auswertemodul 3 eingelesen. Eine Steigungseinleseeinheit 5 ermittelt die aktuelle Steigung. Beispielsweise handelt es sich um ein Satellitenortungssystem oder um vorher in eine digitale Streckenkarte eingegebene Daten, die mit einem Fahrtfreigabetelegramm an das Eisenbahnfahrzeug 1 übermittelt werden. Die Zuglänge liegt für die Ermittlung des Steigungsparameters ebenfalls vor. Von einer elektrischen Bremse 6 wird der Sollwert mit einer Einleseeinheit 7 in das Sicherungssystem 2 und das Auswertemodul 3 eingelesen. Entsprechende Vorrichtungen gibt es für eine Luftdruckbremse 8 und zugehörige Einleseeinheit 9. Das Auswertemodul 3 hat Zugriff auf Kennliniendaten der Bremsen 6 und 8, wobei einem Bremssollwert eine resultierende Bremsverzögerung zugeordnet wird. Die Bremssollwerte liegen als Bremsstellung oder Luftdruck beziehungsweise als elektrische Steuergröße vor. Zu verschiedenen Sollwerten, also zum Beispiel "Bremsstellung 1" oder 5 Bar Überdruck, werden bestimmte Verzögerungen des Zuges zugeordnet, ausgedrückt in Meter pro Sekunde zum Quadrat. Extremwerte sind "Keine Bremse angelegt" und "Notbremsung". Die Kennlinie wird durch die beeinflussenden Rahmenbedingunen parametrisiert. Beispielsweise wird die erwartete Verzögerung durch die Bremsart oder Zuglänge beeinflusst. Diese Daten werden zuvor eingegeben. Die aktuelle Steigung beeinflusst ebenfalls die Verzögerung und wird daher während der Fahrt eingelesen. Bei Bremsungen während der Fahrt wird verglichen; ob die von den Sollwert Einleseeinheiten 7 und 9 eingelesenen Sollwerte eine gemäß der Kennlinie gewünschte Verzögerung ergeben. Aus den schwächeren Verzögerungswerten während einer üblichen Betriebsbremsung kann aufgrund der Kennlinie auf die zu erwartende stärkere Verzögerung bei einer Notbremsung geschlossen werden. Bei Abweichungen in Richtung einer zu geringen Bremsverzögerung gibt das Auswertemodul 3 eine Warnung an den Lokführer aus. Falls die Sicherheitsmerkmale bezüglich der Ausführung des Auswertemoduls 3 es zulassen, passt das Auswertemodul 3 die Kennliniendaten an und übergibt diese an das Zugsicherungssystem 2. Das Zugsicherungssystem 2 überwacht anhand dieser Kcnnlinicndatcn ermittelte Bremskurven vor Gefahrenpunkten wie beispielsweise Halt zeigenden Signalen. Die Bremskurven passen sich somit dem tatsächlichen Bremsvermögen an. Sind die Bremsen schwächer als ursprünglich angenommen, werden die Bremskurven verlängert, so dass der Zug bereits früher vor einem Gefahrenpunkt mit der Bremsung beginnt.

### Bezugszeichenliste

- 1: Eisenbahnfahrzeug
- 2: Zugsicherungssystem
- 3: Auswertemodul mit Kennliniendaten
- 4: Geschwindigkeitseinleseeinheit
- 5: Steigungseinleseeinheit
- 6: Elektrische Bremse
- 7: Sollwert Einleseeinheit für die elektrische Bremse
- 8: Luftdruckbremse
- 9: Sollwert Einleseeinheit für die Luftdruckbremse

## Patentansprüche

1. Bremssicherungssystem für ein mit Bremsen (6, 8) ausgestattetes spurgeführtes Fahrzeug (1), mit:
- einem Auswertemodul mit Kennliniendaten (3), das Bremssollwerten erwartete Bremsverzögerungen zuordnet, und
- Einlesebaugruppen (4, 7, 9), die den Bremssollwert und die aktuelle Geschwindigkeit einlesen,
- wobei das Auswertemodul (3) die während einer Bremsung erzielte Verzögerung mit der erwarteten Bremsverzögerung vergleicht und bei Abweichungen eine Meldung ausgibt,
**dadurch gekennzeichnet, dass**
das Auswertemodul (3) die Kennliniendaten bei Abweichungen zwischen Soll- und Istwert der Bremsverzögerung anpasst und dass
die Meldung an ein Sicherungssystem (2) ausgegeben wird, welches bei Überschreitung von anhand der Kennliniendaten berechneten Bremskurven vor Gefahrenpunkten eine Warnung oder Zwangsbremsung auslöst.

2. Bremssicherungssystem nach Anspruch 1, **gekennzeichnet durch** eine Steigungseinleseeinheit (5), welche die Steigung einliest, die aus einem vorher für die befahrene Strecke erstellten Datensatz hervorgeht oder aktuell von einem Sensor wie beispielsweise Satellitenortung ermittelt wird.

3. Bremssicherungssystem nach Anspruch 1, **dadurch gekennzeichnet dass** die erwartete Bremsverzögerung durch die Fahrzeuglänge beinflusst wird.

4. Bremssicherungssystem nach einem der vorstehenden Ansprüche, **kennzeichnet durch** Warnvorrichtungen, welche bei Abweichungen zwischen der erzielten und der erwarteten Bremsverzögerung eine Warnung an das Betriebspersonal ausgeben.

5. Verfahren zur Überwachung des aktuellen Bremsvermögens eines mit Bremsen (6, 8) ausgestatteten spurgeführten Fahrzeuges und zum Einleiten geeigneter Sicherheitsreaktionen, wobei
- ein Bremssollwert und die aktuelle Geschwindigkeit von Einlesebaugruppen (4, 7, 8) eingelesen werden;
- Kennliniendaten der Bremsen (6, 8) vorgegeben sind, wobei Bremssollwerten erwartete Bremsverzögerungen zuordnet werden;
- die während einer Bremsung erzielte Verzögerung mit der erwarteten Bremsverzögerung verglichen und bei Abweichungen eine Meldung ausgegeben wird,
**dadurch gekennzeichnet dass**
- die Kennliniendaten bei Abweichungen zwischen Soll- und Istwert der Bremsverzögerung angepasst werden und
- bei Überschreitung von anhand der Kennliniendaten berechneten Bremskurven vor Gefahrenpunkten eine Zwangsbremsung ausgelöst wird.

6. Verfahren nach Anspruch 5, **dadurch gekennzeichnet dass** das Steigungsprofil des Fahrzeuges von einer Steigungseinleseeinheit (5) eingelesen wird, wobei das Steigungsprofil aus einem vorher für die befahrene Strecke erstellten Datensatz hervorgeht oder aktuell von einem Sensor wie beispielsweise Satellitenortung ermittelt wird.

7. Verfahren nach einem der Ansprüche 5 oder 6, **dadurch gekennzeichnet dass** die erwartete Bremsverzögerung durch die Fahrzeuglänge beinflusst wird.

8. Verfahren nach einem der Ansprüche 5 bis 7, **dadurch kennzeichnet dass** bei Abweichungen zwischen der erzielten und der erwarteten Bremsverzögerung eine Warnung an das Betriebspersonal aufgegeben wird.

## Claims

1. brake failsafe system for a railborne vehicle (1) equipped with brakes (6, 8), having:
- an evaluation module with characteristic data (3) that assigns anticipated braking decelerations to theoretical braking values and
- reading modules (4, 7, 9), which read in the theoretical braking value and the current speed,
- wherein the evaluation module (3) compares the deceleration achieved during braking with the anticipated braking deceleration and issues a message in case of discrepancies,
**characterised in that**
the evaluation module (3) adapts the characteristic data to the braking deceleration in case of discrepancies between the theoretical and actual value of the braking deceleration and that
the message is outputted to a failsafe system (2) which triggers a warning or forced braking before danger points if braking curves calculated based on characteristic data are exceeded.

2. brake failsafe system according to claim 1, **characterised by** a gradient reading unit (5), which reads in the gradient originating from a data record previously compiled for the line travelled along or currently determined by a sensor such as satellite positioning for example.

3. brake failsafe system according to claim 1, **characterised in that** the anticipated braking deceleration is influenced by the vehicle length.

4. brake failsafe system according to one of the above claims, **characterised by** warning devices which issue a warning to the operating personnel in case of discrepancies between the achieved and anticipated braking deceleration.

5. method for monitoring the current braking ability of a railborne vehicle equipped with brakes (6, 8) and for implementing appropriate safety reactions, wherein
- a theoretical braking value and the current speed of reading modules (4, 7, 8) are read in;
- characteristic data of the brakes (6, 8) are predetermined, wherein anticipated braking decelerations are assigned to theoretical braking values;
- the deceleration achieved during braking is compared with the anticipated braking deceleration and a message is issued in case of discrepancies,
**characterised in that**
- the characteristic data are adapted to the braking deceleration in case of discrepancies between the theoretical and actual value
- forced braking is triggered before danger points if braking curves calculated based on the characteristic data are exceeded.

6. method according to claim 5, **characterised in that** the gradient profile of the vehicle is read in from a gradient reading unit (5), wherein the gradient profile originates from a data record previously compiled for the line travelled on or is currently determined by a sensor, such as satellite positioning for example.

7. method according to either of claims 5 or 6, **characterised in that** the anticipated braking deceleration is influenced by the vehicle length.

8. method according to any of claims 5 to 7, **characterised in that** a warning to the operating personnel is issued in case of discrepancies between the achieved and anticipated braking deceleration.

## Revendications

1. Système de sécurité de freinage pour un véhicule (1) guidé sur rails équipé de freins (6, 8), comportant :
- un module d'analyse avec des données de courbes caractéristiques (3), lequel associe des décélérations de freinage escomptées à des valeurs de consigne de freinage, et
- des composants d'entrée en mémoire (4, 7, 9) qui entrent en mémoire la valeur de consigne du freinage et la vitesse actuelle,
- le module d'analyse (3) comparant la décélération obtenue par freinage à la décélération de freinage escomptée et délivrant un message en cas de divergences,
**caractérisé en ce que**
le module d'analyse (3) ajuste les données des courbes caractéristiques en cas de divergences entre la valeur de consigne et la valeur réelle de la décélération de freinage, et **en ce que**
le message est émis vers un système de sécurité (2) qui, lorsque les courbes de freinage sont supérieures à celles calculées à l'appui des données des courbes caractéristiques, déclenche avant les points dangereux une alarme ou un freinage forcé.

2. Système de sécurité de freinage selon la revendication 1, **caractérisé par** une unité d'entrée en mémoire de la pente ascendante (5), qui entre en mémoire la pente ascendante qui découle d'un enregistrement de données établi précédemment pour la distance parcourue ou qui est déterminée actuellement par un capteur, tel qu'une localisation par satellite.

3. Système de sécurité de freinage selon la revendication 1, **caractérisé en ce que** la décélération de freinage escomptée est influencée par la longueur du véhicule.

4. Système de sécurité de freinage selon l'une quelconque des revendications précédentes, **caractérisé par** des dispositifs d'alarme, qui délivrent une alarme pour le personnel de service en cas de divergences entre la décélération de freinage obtenue et celle escomptée.

5. Procédé pour la surveillance de la capacité de freinage actuelle d'un véhicule guidé sur rails, équipé de freins (6, 8), et pour introduire des réactions de sécurité appropriées, dans lequel procédé
- une valeur de consigne du freinage et la vitesse actuelle sont entrées en mémoire par des composants d'entrée en mémoire (4, 7, 9) ;
- des données de courbes caractéristiques des freins (6, 8) sont prédéfinies, des décélérations de freinage escomptées étant associées à des valeurs de consigne du freinage ;
- la décélération obtenue pendant un freinage est comparée à la décélération de freinage escomptée et un message est délivré en cas de divergences,
**caractérisé en ce que**
- les données des courbes caractéristiques sont ajustées en cas de divergences entre la valeur de consigne et la valeur réelle de la décélération de freinage,
- un freinage forcé étant déclenché avant les points dangereux lorsque les courbes de freinage sont supérieures à celles calculées à l'appui des données des courbes caractéristiques.

6. Procédé selon la revendication 5, **caractérisé en ce que** le profil de pente ascendante du véhicule est entré en mémoire par une unité d'entrée en mémoire de la pente ascendante (5), sachant que le profil de pente ascendante découle d'un enregistrement de données établi précédemment pour la distance parcourue ou est déterminé actuellement par un capteur, tel qu'une localisation par satellite.

7. Procédé selon la revendication 5 ou 6, **caractérisé en ce que** la décélération de freinage escomptée est influencée par la longueur du véhicule.

8. Procédé selon l'une quelconque des revendications 5 à 7, **caractérisé en ce qu'**une alarme est délivrée pour le personnel de service en cas de divergences entre la décélération de freinage obtenue et celle escomptée.
